# EUROPÄISCHE PATENTANMELDUNG

(11) **EP 3 992 480 A1**
(43) Veröffentlichungstag der Anmeldung: **04.05.2022**
(21) Anmeldenummer: 21202487.1
(22) Anmeldetag: 13.10.2021
(51) Int. Cl.: F16B 21/18

(54) **SICHERUNGSRING**

(30) Priorität: 30.10.2020 DE 102020006666
(71) Anmelder: Seeger-Orbis GmbH, 61462 Königstein (DE)
(72) Erfinder: Steiger, Jan, 55270 Essenheim (DE); Hoelke, Stephan, 61118 Bad Vilbel (DE)
(74) Vertreter: Tilmann, Max Wilhelm

(57) **Zusammenfassung**

Die Erfindung betrifft einen Sicherungsring (1) mit einem Grundkörper (2), der bis auf eine ihn unterbrechende Öffnung (3) ringförmig ausgeführt ist, wobei die die Ringform unterbrechende Öffnung an einer ersten Seite von einer Endfläche (4) eines ersten Endes (5) des Grundkörpers und an einer zweiten, der ersten Seite gegenüberliegenden Seite von einer Endfläche (6) eines zweiten Endes (7) des Grundkörpers begrenzt wird und im ersten Ende ein Montageloch (8) vorgesehen ist und im zweiten Ende ein Montageloch (9) vorgesehen ist, wobei im Grundkörper mindestens eine geschlossene Tasche (10) vorgesehen ist.

## Beschreibung

Die Erfindung betrifft einen Sicherungsring mit einem Grundkörper, der bis auf eine ihn unterbrechende Öffnung ringförmig ausgeführt ist. Ferner betrifft die Erfindung eine Welle mit einer umlaufenden Nut. Ferner betrifft die Erfindung ein Bauteil mit einer Bohrung und einer in der Bohrung umlaufenden Nut.

Sicherungsringe sind aus den Normen DIN 471 für Wellennuten und DIN 472 für Bohrungsnuten bekannt. Dort wird gezeigt, dass der Sicherungsring mit einem Grundkörper ausgeführt ist, der bis auf eine ihn unterbrechende Öffnung ringförmig ausgeführt ist. Die die Ringform unterbrechende Öffnung wird an einer ersten Seite von einer Endfläche eines ersten Endes des Grundkörpers begrenzt und an einer zweiten, der ersten Seite gegenüberliegenden Seite von einer Endfläche eines zweiten Endes des Grundkörpers begrenzt.

Ein Sicherungsring kann als Sprengring ausgeführt sein. In einem solchen Fall ist üblicherweise im ersten Ende kein Montageloch vorgesehen und auch im zweiten Ende kein Montageloch vorgesehen. In anderen Ausführungsformen ist der Sicherungsring so ausgeführt, dass im ersten Ende ein Montageloch vorgesehen ist und im zweiten Ende ein Montageloch vorgesehen ist. Die Montagelöcher können dazu verwendet werden, den Ring mittels einer speziellen Zange zu montieren.

Aus US 4,183,280 ist ein Sicherungsring mit einem Grundkörper, der bis auf eine ihn unterbrechende Öffnung ringförmig ausgeführt ist, bekannt, wobei die die Ringform unterbrechende Öffnung an einer ersten Seite von einer Endfläche eines ersten Endes des Grundkörpers und an einer zweiten, der ersten Seite gegenüberliegenden Seite von einer Endfläche eines zweiten Endes des Grundkörpers begrenzt wird, wobei im ersten Ende ein Montageloch und im zweiten Ende ein Montageloch vorgesehen ist. Bei dem aus US 4,183,280 bekannten Sicherungsring sind an der Innenkante des Grundkörpers mehrere offene Taschen vorgesehen. Eine vergleichbarer Sicherungsring ist aus EP 0 019 361 A1 bekannt. Dort sind sogar an der Außenkante des Grundkörpers offene Taschen vorgesehen.

Nachteilig an den aus US 4,183,280 und EP 0 019 361 A1 bekannten Sicherungsringen ist, dass diese in der Herstellung aufwendig sind.

Vor diesem Hintergrund lag der Erfindung die Aufgabe zu Grunde, einen Sicherungsring zu schaffen, der sich einfacher herstellen lässt.

Diese Aufgabe wird durch den Sicherungsring gemäß Anspruch 1 und den Sicherungsring gemäß Anspruch 2 sowie durch die Welle gemäß Anspruch 10 oder das Bauteil gemäß Anspruch 11 oder die Verwendung gemäß Anspruch 12 gelöst. Vorteilhafte Ausführungsformen sind in den Unteransprüchen und der hier nachfolgenden Beschreibung wiedergegeben.

Die Erfindung geht von dem Grundgedanken aus, den Grundkörper mit mindestens einer geschlossenen Tasche auszustatten.

Damit erlaubt es die Erfindung, Sicherungsringe herzustellen, die einen gleich bleibenden Querschnitt an der Innenfläche und der Außenfläche des Grundkörpers haben. Es wird die Möglichkeit geschaffen, die Naturkante des Rohrmaterials zu erhalten, wobei unter der Naturkante des Rohrmaterials beispielsweise die Außenoberfläche eines Drahts verstanden wird, der zur Herstellung des Sicherungsrings verwendet wird. Ferner erlaubt es die Erfindung, Sicherungsringe zu gestalten, die keine Risse oder Einkerbungen an der Innenkante und/oder der Außenkante des Rings haben. Der erfindungsgemäße Sicherungsring hat eine höhere Spannungsriss-Toleranz. Die Erfindung erlaubt es, ein einmal als vorteilhaft erarbeitetes spezielles Design einer Ausführungsform der Erfindung sowohl für Sicherungsringe für Wellennuten als auch für Sicherungsringe für Bohrungsnuten zu verwenden.

In der nachfolgenden Beschreibung wird mit dem Begriff "Tasche" die erfindungsgemäß in dem Grundkörper vorzusehende geschlossene Tasche bzw. eine der in dem Grundkörper vorzusehenden geschlossenen Tasche beschrieben. Soweit nachfolgend der Begriff "Tasche" verwendet wird, ist damit somit eine geschlossene Tasche gemeint. Sollten gemäß bevorzugten Ausführungsformen neben den (geschlossenen) Taschen auch offene Taschen vorgesehen sein, so werden diese in der nachfolgenden Beschreibung explizit als "offene Tasche" beschrieben.

Der erfindungsgemäße Sicherungsring weist einen Grundkörper auf, der bis auf eine ihn unterbrechende Öffnung ringförmig ausgeführt ist. In einer bevorzugten Ausführungsform weist der Grundkörper zumindest in einer radial verlaufenden Ebene, vorzugsweise in vielen radial verlaufenden Ebenen, insbesondere bevorzugt in der Mehrzahl der radial verlaufenden Ebenen und ganz besonders bevorzugt in allen radial verlaufenden Ebenen, die den Grundkörper schneiden, einen rechteckigen Querschnitt auf. In einer bevorzugten Ausführungsform weist der Grundkörper zumindest in einer radial verlaufenden Ebene, vorzugsweise in vielen radial verlaufenden Ebenen, insbesondere bevorzugt in der Mehrzahl der radial verlaufenden Ebenen und ganz besonders bevorzugt in allen radial verlaufenden Ebenen, die den Grundkörper schneiden, einen runden Querschnitt auf. In einer bevorzugten Ausführungsform weist der Grundkörper zumindest in einer radial verlaufenden Ebene, vorzugsweise in vielen radial verlaufenden Ebenen, insbesondere bevorzugt in der Mehrzahl der radial verlaufenden Ebenen und ganz besonders bevorzugt in allen radial verlaufenden Ebenen, die den Grundkörper schneiden, einen polygonen Querschnitt auf.

Unter einer radial verlaufenden Ebene wird eine Ebene verstanden die den Grundkörper schneidet und senkrecht zu der Umfangsrichtung des Grundkörpers, die der Grundkörper in dieser Schnittfläche hat, verläuft. Eine mathematische Ebene hat eine unendliche Erstreckung. Deshalb würde eine mathematische Ebene den Grundkörper regelmäßig zweimal schneiden (nämlich überall dort, wo die mathematische Ebene nicht durch die Öffnung verläuft). Zur Vermeidung von Missverständnissen wird als "radial Ebene" in der vorliegenden Beschreibung nur der Teil einer mathematischen Ebene verstanden, der sich von dem Mittelpunkt des Grundkörpers fort und somit nur einmal durch den Grundkörper erstreckt.

Als Mittelpunkt eines Sicherungsrings wird bei einem Sicherungsring, bei dem als "übriger Bereich" der Teil des Grundkörpers verstanden wird, der das erste Ende mit dem zweiten Ende verbindet, und bei dem die Außenkante des übrigen Bereichs (teil)kreisförmig um einen Mittelpunkt und die Innenkante des übrigen Bereichs (teil)kreisförmig um denselben Mittelpunkt ausgeführt ist, dieser Mittelpunkt verstanden.

Als Mittelpunkt eines Sicherungsrings wird bei einem Sicherungsring, bei dem als "übriger Bereich" der Teil des Grundkörpers verstanden wird, der das erste Ende mit dem zweiten Ende verbindet, und bei dem die Außenkante des übrigen Bereichs (teil)kreisförmig um einen Mittelpunkt, die Innenkante des übrigen Bereichs aber nicht durchgängig (teil)kreisförmig um denselben Mittelpunkt ausgeführt ist, der Mittelpunkt als Mittelpunkt des Sicherungsrings verstanden, um den die Außenkante (teil)kreisförmig ausgeführt ist; diese Ringe sind meist Bohrungsringe (Ringe für Bohrungsnuten).

Als Mittelpunkt eines Sicherungsrings wird bei einem Sicherungsring, bei dem als "übriger Bereich" der Teil des Grundkörpers verstanden wird, der das erste Ende mit dem zweiten Ende verbindet, und bei dem die Innenkante des übrigen Bereichs (teil)kreisförmig um einen Mittelpunkt, die Außenkante des übrigen Bereichs aber nicht durchgängig (teil)kreisförmig um denselben Mittelpunkt ausgeführt ist, der Mittelpunkt als Mittelpunkt des Sicherungsrings verstanden, um den die Innenkante (teil)kreisförmig ausgeführt ist; diese Ringe sind meist Wellenringe (Ringe für Nuten auf Wellen).

In einer bevorzugten Ausführungsform weist der Grundkörper zumindest in einer radial verlaufenden Ebene, vorzugsweise in vielen radial verlaufenden Ebenen, insbesondere bevorzugt in der Mehrzahl der radial verlaufenden Ebenen und ganz besonders bevorzugt in allen radial verlaufenden Ebenen, die den Grundkörper schneiden, eine radiale Breite auf, die größer ist, als die jeweilige Dicke des Grundkörpers in der gleichen Ebene.

In einer bevorzugten Ausführungsform ist die radiale Breite des Grundkörpers am ersten Ende des Grundkörpers und/oder die radiale Breite des Grundkörpers am zweiten Ende des Grundkörpers unterschiedlich zu der radialen Breite, die der Grundkörper in zumindest einer radialen Ebene in seinem übrigen Bereich hat, wobei als übriger Bereich des Grundkörpers der Teil des Grundkörpers verstanden wird, der das erste Ende mit dem zweiten Ende verbindet. In einer bevorzugten Ausführungsform ist die radiale Breite des Grundkörpers am ersten Ende des Grundkörpers und/oder die radiale Breite des Grundkörpers am zweiten Ende des Grundkörpers größer als die radiale Breite, die der Grundkörper in zumindest einer radialen Ebene in seinem übrigen Bereich hat.

In einer bevorzugten Ausführungsform ist die radiale Breite des Grundkörpers in einer Vielzahl, vorzugsweise in einer Mehrzahl, vorzugsweise in allen radialen Ebenen, die den Grundkörper im übrigen Bereich schneiden, gleich.

In einer bevorzugten Ausführungsform ist die radiale Breite des ersten Endes des Grundkörpers in einer Vielzahl, vorzugsweise in einer Mehrzahl, vorzugsweise in allen radialen Ebenen, die den Grundkörper im ersten Ende schneiden, gleich. Vorzugsweise ist zwischen dem ersten Ende und dem übrigen Bereich des Grundkörpers eine Stufe vorgesehen. In einer bevorzugten Ausführungsform ist die radiale Breite des zweiten Endes des Grundkörpers in einer Vielzahl, vorzugsweise in einer Mehrzahl, vorzugsweise in allen radialen Ebenen, die den Grundkörper im zweiten Ende schneiden, gleich. Vorzugsweise ist zwischen dem zweiten Ende und dem übrigen Bereich des Grundkörpers eine Stufe vorgesehen.

Ferner sind Ausführungsformen möglich, bei denen die radiale Breite des Grundkörpers in allen radialen Ebenen, die den Grundkörper schneiden, gleich ist und somit auch im Bereich des ersten Endes und des zweiten Endes gleich zu der radialen Breite im übrigen Bereich des Grundkörpers ist.

Die Beschreibung des erfindungsgemäßen Sicherungsrings bezieht sich auf den ungespannten Zustand des Sicherungsrings. Die Erfindung beschreibt einen Sicherungsring im ungespannten Zustand.

Die die Ringform unterbrechende Öffnung wird an einer ersten Seite von einer Endfläche eines ersten Endes des Grundkörpers begrenzt. In einer bevorzugten Ausführungsform ist die Endfläche des ersten Endes des Grundkörper eine Fläche, die in einer Ebene, vorzugsweise einer radialen Ebene verläuft. Es sind jedoch auch Ausführungsformen möglich, bei denen in der Endfläche des ersten Endes des Grundkörpers eine Ausnehmung, beispielsweise eine halbkreisförmige Ausnehmung vorgesehen ist. Die die Ringform unterbrechende Öffnung wird an einer zweiten Seite von einer Endfläche eines zweiten Endes des Grundkörpers begrenzt. In einer bevorzugten Ausführungsform ist die Endfläche des zweiten Endes des Grundkörper eine Fläche, die in einer Ebene, vorzugsweise einer radialen Ebene verläuft. Es sind jedoch auch Ausführungsformen möglich, bei denen in der Endfläche des zweiten Endes des Grundkörpers eine Ausnehmung, beispielsweise eine halbkreisförmige Ausnehmung vorgesehen ist. Derartige Ausnehmungen in den Enden des Grundkörpers werden bei Sicherungsringen teilweise anstelle von Montagelöchern, die in dem jeweiligen Ende des Grundkörpers ausgeführt sind, verwendet.

In einer bevorzugten Ausführungsform verläuft die Ebene, in der sich die Endfläche des ersten Endes befindet, in einem Winkel zur Ebene, in der sich die Endfläche des zweiten Endes des Grundkörpers befindet. In einer bevorzugten Ausführungsform ist der Winkel zwischen der Ebene, in der sich die Endfläche des ersten Endes befindet, und der Ebene, in der sich die Endfläche des zweiten Endes befindet, kleiner als 180°, insbesondere bevorzugt kleiner als 160°, insbesondere bevorzugt kleiner als 130°. In einer bevorzugten Ausführungsform ist der Winkel zwischen der Ebene, in der sich die Endfläche des ersten Endes befindet, und der Ebene, in der sich die Endfläche des zweiten Endes befindet, größer als 5°, insbesondere bevorzugt größer als 10°, insbesondere bevorzugt größer als 20°.

In einer alternativen, ebenfalls bevorzugten Ausführungsform verläuft die Ebene, in der sich die Endfläche des ersten Ende befindet, parallel zu der Ebene, in der sich die Endfläche des zweiten Endes des Grundkörpers befindet.

Die Erfindung lässt sich auf Sicherungsringe anwenden, bei denen im ersten Ende ein Montageloch vorgesehen ist und im zweiten Ende ein Montageloch vorgesehen ist. Die Erfindung dieses Grundtyps eines Sicherungsrings ist im Anspruch 1 beschrieben. Die Erfindung lässt sich aber auch auf solche Sicherungsringe anwenden, bei denen im ersten Ende kein Montageloch vorgesehen ist und im zweiten Ende ebenfalls kein Montageloch vorgesehen ist. Dieser Grundtyp eines Sicherungsrings ist im nebengeordneten Anspruch 2 beschrieben. In einer bevorzugten Ausfürhungsform ist in dem ersten Ende ein Montageloch vorgesehen, aber in dem zweiten Ende nicht.

In einer bevorzugten Ausführungsform ist das jeweilige Montageloch (soweit es in der jeweiligen Ausführungsform vorgesehen ist, als Rundloch oder als Langloch ausgeführt. In einer bevorzugten Ausführungsform sind alle Montagelöcher, die vor handen sind, in Form und/oder Größer gleich ausgeführt. Es sind aber auch Ausführungsformen denkbar, bei denen ein vorhandenes Montageloch in Form und/oder Größe unterschiedlich zu einem anderen Montageloch ist.

In einer bevorzugten Ausführungsform ist das erste Ende mit einem Vorsprung ausgeführt, der gegenüber dem übrigen Bereich des Grundkörpers radial nach außen (beispielsweise für den Anwendungsfall der Wellennuten) oder radial nach innen (beispielsweise für den Anwendungsfall der Bohrungsnuten) vorspringt. In einer bevorzugten Ausführungsform ist ein Montageloch des Sicherungsrings in diesem Vorsprung ausgeführt. In einer bevorzugten Ausführungsform ist das zweite Ende mit einem Vorsprung ausgeführt, der gegenüber dem übrigen Bereich des Grundkörpers radial nach außen (beispielsweise für den Anwendungsfall der Wellennuten) oder radial nach innen (beispielsweise für den Anwendungsfall der Bohrungsnuten) vorspringt. In einer bevorzugten Ausführungsform ist ein Montageloch des Sicherungsrings in diesem Vorsprung ausgeführt. Ein mit einem Vorsprung ausgeführtes erstes Ende wird in der Branche häufig auch als "Ohr" oder "Lasche" bezeichnet.

Erfindungsgemäß ist vorgesehen, dass im Grundkörper mindestens eine Tasche vorgesehen ist. In einer bevorzugten Ausführungsform weist der Grundkörper nur eine Tasche, bzw. nur Taschen auf, jedoch keine offenen Taschen, wie sie beispielsweise aus US 4,183,280 und EP 0 019 361 A1 bekannt sind.

In einer bevorzugten Ausführungsform weist der Grundkörper mindestens zwei Taschen auf. In einer besonders bevorzugten Ausführungsform weist der Grundkörper drei Taschen, insbesondere bevorzugt mindestens drei Taschen auf.

In einer bevorzugten Ausführungsform ist die einzige Tasche, soweit der Grundkörper nur eine einzige Tasche aufweist, oder eine Tasche der im Grundkörper vorgesehenen mehreren Taschen in dem Bereich des Grundkörpers ausgeführt, der der Öffnung gegenüber liegt. einer bevorzugten Ausführungsform ist eine Tasche in dem Bereich zwischen 125° und 235° angeordnet, wenn die Mitte der Öffnung als 0°-Position genommen wird.

Als Tasche wird eine Öffnung im Grundkörper verstanden. Bei Sicherungsringen, die Montagelöcher und somit bereits Öffnungen haben, ist eine Tasche eine zusätzliche Öffnung zu den Montagelöchern. Eine Tasche ist insbesondere eine Öffnung im Grundkörper, die den Grundkörper vollständig durchgreift. Eine Tasche ist inbesondere eine Öffnung im Grundkörper, die von einer ersten Oberfläche des Grundkörpers zu einer der ersten Oberfläche gegenüberliegend angeordneten zweiten Oberfläche, die von der ersten Oberfläche fort weist, führt. Eine Tasche ist inbesondere eine Öffnung im Grundkörper mit einer Querschnittsform, die über Dicke des Grundkörpers gleichbleibt. Ist die Tasche beispielsweise im Querschnitt kreisförmig, so bleibt in einer bevorzugten Ausführungsform der Querschnitt der Tasche über die gesamte Erstreckung der Tasche durch den Grundkörper kreisförmig. Ist die Tasche beispielsweise im Querschnitt ellipsenförmig, so bleibt in einer bevorzugten Ausführungsform der Querschnitt der Tasche über die gesamte Erstreckung der Tasche durch den Grundkörper ellipsenförmig. Ist die Tasche beispielsweise im Querschnitt bogenförmig, so bleibt in einer bevorzugten Ausführungsform der Querschnitt der Tasche über die gesamte Erstreckung der Tasche durch den Grundkörper bogenförmig. In einer bevorzugten Ausführungsform ist die Tasche frei von weiteren Elementen des Grundkörpers, die in die Tasche ragen.

In einer bevorzugten Ausführungsform wird die Tasche durch Begrenzungswände begrenzt. Die Begrenzungswände können flache Wände sein, beispielsweise bei einer rechteckförmigen Tasche. Die Begrenzungswände können auch gebogene Wände sein, beispielsweise bei einer ellipsenförmigen Tasche oder eine bogenförmigen Tasche. In einer bevorzugten Ausführungsform verlaufen die Begrenzungswände senkrecht zu einer Oberfläche des Grundkörpers, vorzugsweise senkrecht zu der Oberfläche des Grundkörpers, in die die Tasche mündet, bzw. von der die Tasche aus in durch den Grundkörper führt.

In einer bevorzugten Ausführungsform ist der Sicherungsring spiegelsymmetrisch bezüglich einer mittig durch die Öffnung verlaufenden Ebene ausgeführt. Als eine mittig durch die Öffnung verlaufende Ebene wird eine Ebene verstanden, die senkrecht zu einer Umfangsrichtung des Grundkörpers verläuft und die mit gleichem Abstand zu den die Öffnung begrenzenden Endflächen und durch die Öffnung verläuft.

Es sind Ausführungsformen möglich, bei denen die Taschen regelmäßig über den Grundkörper verteilt sind. Unter einer regelmäßigen Verteilung der Taschen über den Grundkörper wird eine Verteilung verstanden, bei der der Winkel
- zwischen einer radial und durch den Flächenmittelpunkt einer ersten Tasche verlaufenden Linie
- und einer radial und durch den Flächenmittelpunkt einer der ersten Tasche benachbarten Tasche verlaufenden Linie
für jede Paarung benachbarter Taschen im Grundkörper gleich ist.

In einer besonders bevorzugten Ausführungsform ist der Winkel zwischen der radialen Linie, die entlang der Endfläche des ersten Endes des Grundkörpers verläuft, und der radialen Linie, die durch den Flächenmittelpunkt der dem ersten Ende benachbarten Tasche verläuft, gleich dem Winkel
- zwischen dieser radial und durch den Flächenmittelpunkt der dem ersten Ende benachbarten, ersten Tasche verlaufenden Linie
- und einer radial und durch den Flächenmittelpunkt der der ersten Tasche benachbarten, nächsten Tasche verlaufenden Linie.

In einer besonders bevorzugten Ausführungsform ist der Winkel zwischen der radialen Linie, die entlang der Endfläche des zweiten Endes des Grundkörpers verläuft, und der radialen Linie, die durch den Flächenmittelpunkt der dem zweiten Ende benachbarten Tasche verläuft, gleich dem Winkel
- zwischen dieser radial und durch den Flächenmittelpunkt der dem zweiten Ende benachbarten, letzten Tasche verlaufenden Linie
- und einer radial und durch den Flächenmittelpunkt der der letzten Tasche benachbarten, vorletzten Tasche verlaufenden Linie.

Es sind Ausführungsformen möglich, bei denen die Taschen unregelmäßig über den Grundkörper verteilt sind. Unter einer unregelmäßigen Verteilung der Taschen über den Grundkörper wird eine Verteilung verstanden, bei der zumindest für zwei Paarungen benachbarter Taschen der Winkel
- zwischen einer radial und durch den Flächenmittelpunkt einer ersten Tasche verlaufenden Linie
- und einer radial und durch den Flächenmittelpunkt einer der ersten Tasche benachbarten Tasche verlaufenden Linie
unterschiedlich zu dem Winkel
- zwischen einer radial und durch den Flächenmittelpunkt einer weiteren Tasche verlaufenden Linie
- und einer radial und durch den Flächenmittelpunkt einer der weiteren Tasche benachbarten Tasche verlaufenden Linie
ist.

Es sind Ausführungsformen möglich, bei denen die Taschen im Querschnitt rund oder ellipsenförmig oder rechteckig ausgeführt sind. In einer bevorzugten Ausführungsform sind die Taschen jedoch bogenförmig ausgeführt. In einer bevorzugten Ausführungsform ist der Mittelpunkt des Bogens, entlang dessen die bogenförmig ausgeführte Tasche verläuft, der Mittelpunkt des ringförmig ausgeführten Grundkörpers.

In einer bevorzugten Ausführungsform weist eine Tasche ein erstes Taschenende und ein dem ersten Taschenende in Umfangsrichtung gegenüberliegendes zweites Taschenende auf. In einer bevorzugten Ausführungsform wird das erste Taschenende und/oder das zweite Taschenende durch eine Begrenzungsfläche gebildet, die in einer radial verlaufenden Ebene verläuft. In einer alternativen Ausführungsform ist das erste Taschenende und/oder das zweite Taschenende halbkreisförmige oder kreisabschnittförmig oder polygon, beispielsweise pfeilförmig ausgeführt.

In einer bevorzugten Ausführungsform weist eine Tasche des Grundkörper eine Innenkante auf, die die Tasche an der dem Mittelpunkt des ringförmigen Grundkörpers näherliegenden Seite begrenzt. In einer bevorzugten Ausführungsform verläuft die Innenkante bogenförmig. Insbesondere bevorzugt verläuft die Innenkante bogenförmig um den Mittelpunkt des ringförmig ausgeführten Grundkörpers.

In einer bevorzugten Ausführungsform weist eine Tasche des Grundkörpers eine Außenkante auf, die die Tasche an der dem Mittelpunkt des ringförmigen Grundkörpers ferner liegenden Seite begrenzt. In einer bevorzugten Ausführungsform verläuft die Außenkante bogenförmig. Insbesondere bevorzugt verläuft die Außenkante bogenförmig um den Mittelpunkt des ringförmig ausgeführten Grundkörpers.

In einer bevorzugten Ausführungsform weist eine Tasche des Grundkörpers eine maximale Breite auf, wobei als maximale Breite der maximale Abstand in radialer Richtung zwischen der Innenkante und der Außenkante der Tasche verstanden wird. In einer bevorzugten Ausführungsform ist die maximale Breite der Tasche 50 %, insbesondere bevorzugt 60 %, insbesondere bevorzugt 70 %, insbesondere bevorzugt 80 % der radialen Breite des Sicherungsrings am Ort der maximalen Breite der Tasche.

In einer bevorzugten Ausführungsform entspricht die Gesamtfläche der Taschen, die der Fläche der vorhandenen Tasche entspricht, soweit nur eine Tasche vorhanden ist, oder der Summe der Flächen der vorhandenen Taschen entspricht, mindestens 10 %, insbesondere bevorzugt 20%, insbesondere bevorzugt 30%, insbesondere bevorzugt 40%, insbesondere bevorzugt 50% der Gesamtfläche des Grundkörper, wobei die Gesamtfläche des Grundkörpers der Fläche entspricht, die durch die umlaufende Kante des Grundkörpers begrenzt wird. Die Gesamtfläche des Grundkörpers ist mithin die Fläche, die durch die Außenkante und die Innenkante des Grundkörpers und etwaige Kanten der jeweiligen Enden des Grundkörpers begrenzt wird, ohne dass von dieser Fläche die Fläche etwaiger Montagelöcher oder die Fläche etwaiger Taschen abgezogen wird.

In einer bevorzugten Ausführungsform ist eine Tasche in dem Bereich zwischen 10° und 90° und eine Tasche in dem Bereich zwischen 350° und 270° angeordnet, wenn die Mitte der Öffnung als 0°-Position genommen wird. Eine Tasche, die näher dem Ende eines Grundkörpers angeordnet ist, als dem der Öffnung gegenüberliegenden Teil des Grundkörpers hilft, die Rundanlage des Sicherungsrings zu verbessern. Eine innenliegende Tasche, die in dem Bereich des Grundkörpers angeordnet ist, die der Öffnung gegenüber liegt, hilft insbesondere der Auswuchtung des Sicherungsrings.

In einer bevorzugten Ausführungsform ist keine der vorhandenen Taschen in dem Bereich zwischen 125° und 235° angeordnet, wenn die Mitte der Öffnung als 0°-Position angenommen wird. Ergänzend oder alternativ ist in einer bevorzugten Ausführungsform keine Tasche in dem Bereich zwischen 10° und 90° und/oder in dem Bereich zwischen 350° und 270° angeordnet, wenn die Mitte der Öffnung als 0°-Position genommen wird.

In einer bevorzugten Ausführungsform verläuft die Außenkante des Grundkörper in dem übrigen Bereich stetig. In den übrigen Bereichen sind insbesondere bevorzugt keine Vorsprünge an der Außenkante vorgesehen. In einer bevorzugten Ausführungsform verläuft die Innenkante des Grundkörper in dem übrigen Bereich stetig. In den übrigen Bereichen sind insbesondere bevorzugt keine Vorsprünge an der Innenkante vorgesehen.

In einer bevorzugten Ausführungsform sind mehrere der vorhandenen Taschen, insbesondere bevorzugt die Mehrzahl der vorhandenen Taschen, insbesondere bevorzugt alle vorhandenen Taschen bezüglich ihrer Form gleich ausgeführt, wobei Ausführungsformen denkbar sind, bei denen die Form einer ersten Tasche der Form einer zweiten Tasche entspricht, die erste Tasche aber hinsichtlich ihrer Größe kleiner ausgeführt ist als die zweite Tasche. In einer bevorzugten Ausführungsform sind mehrere der vorhandenen Taschen, insbesondere bevorzugt die Mehrzahl der vorhandenen Taschen, insbesondere bevorzugt alle Taschen hinsichtlich ihrer Größe gleich ausgeführt, wobei damit die Fläche verstanden wird, die die Tasche einnimmt; dabei sind jedoch auch Ausführungsformen denkbar, bei denen die Taschen zwar die gleiche Größe aufweisen, aber hinsichtlich ihrer Form unterschiedlich ausgestaltet sind. In einer besonders bevorzugten Ausführungsform sind mehrere der vorhandenen Taschen, insbesondere bevorzugt die Mehrzahl der vorhandenen Taschen, insbesondere bevorzugt alle vorhandenen Taschen sowohl hinsichtlich ihrer Größe als auch hinsichtlich ihrer Form gleich ausgeführt.

In einer bevorzugten Ausführungsform ist die Außenkante des Grundkörpers teilkreisförmig ausgeführt und weist einen Durchmesser von mehr als 55mm, vorzugsweise von mehr als 100mm, insbesondere bevorzugt von mehr als 250mm und ganz besonders bevorzugt von mehr als 400mm auf. In einer bevorzugten Ausführungsform ist die Innenkante des Grundkörpers teilkreisförmig ausgeführt und weist einen Durchmesser von mehr als 55mm, vorzugsweise von mehr als 100mm, insbesondere bevorzugt von mehr als 250mm und ganz besonders bevorzugt von mehr als 400mm auf.

In einer bevorzugten Ausführungsform ist der Sicherungsring aus Metall, vorzugsweise aus Vergütungsstahl oder Federstahl. Es sind jedoch auch Ausführungsformen denkbar, bei denen der Sicherungsring aus Kunststoff hergestellt wird. In einer bevorzugten Ausführungsform ist der Sicherungsring jedoch nicht aus Kunststoff hergestellt.

In einer bevorzugten Ausführungsform findet der erfindungsgemäße Sicherungsring Anwendung bei Windkraftanlagen bei Lastkraftwagen, Landmaschinen und Baufahrzeugen, oder Flurförderfahrzeuge oder Transportbänder.

Die erfindungsgemäße Welle weist eine umlaufende Nut und einen in der Nut angeordneten erfindungsgemäßen Sicherungsring auf. Unter den Begriff "Welle" fällt im Rahmen dieser Beschreibung der Erfindung auch eine Achse.

Das erfindungsgemäße Bauteil weist eine Bohrung und eine in der Bohrung umlaufenden Nut sowie einen in der Nut angeordneten erfindungsgemäßen Sicherungsring auf.

Nachfolgend wird die Erfindung anhand einer lediglich Ausführungsformen der Erfindung näher darstellenden Zeichnung näher erläutert. Darin zeigen
- Fig. 1: eine Draufsicht auf einen erfindungsgemäßen Sicherungsring gemäß einer ersten Ausführungsform;
- Fig. 2: eine Draufsicht auf einen erfindungsgemäßen Sicherungsring gemäß einer zweiten Ausführungsform;
- Fig. 3: eine Draufsicht auf einen erfindungsgemäßen Sicherungsring gemäß einer dritten Ausführungsform;
- Fig. 4: eine Draufsicht auf einen erfindungsgemäßen gemäß einer vierten Ausführungsform;
- Fig. 5: eine Draufsicht auf einen erfindungsgemäßen gemäß einer fünften Ausführungsform;
- Fig. 6: eine Draufsicht auf einen erfindungsgemäßen gemäß einer sechsten Ausführungsform;
- Fig. 7: eine Draufsicht auf einen erfindungsgemäßen gemäß einer siebten Ausführungsform und
- Fig. 8: eine Draufsicht auf einen erfindungsgemäßen gemäß einer achten Ausführungsform.

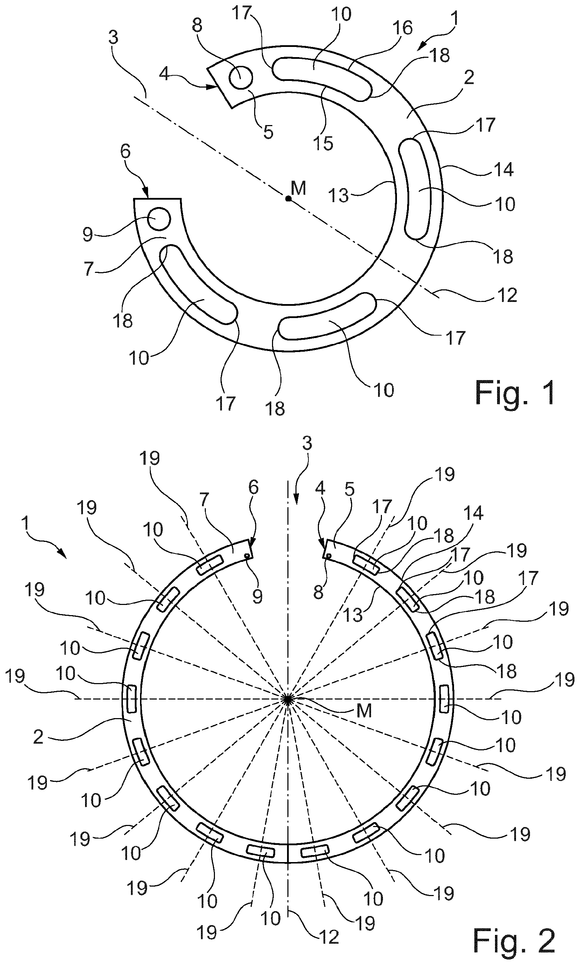

Die in den Fig. 1 bis 8 dargestellten Sicherungsringe 1 weisen jeweils einen Grundkörper 2 auf. Der Grundkörper 2 ist bis auf eine ihn unterbrechende Öffnung 3 ringförmig ausgeführt. Die die Ringform unterbrechende Öffnung 3 wird an einer ersten Seite durch eine Endfläche 4 eines ersten Endes 5 des Grundkörpers und an einer zweiten, der ersten Seite gegenüberliegenden Seite von einer Endfläche 6 eines zweiten Endes 7 des Grundkörpers 2 begrenzt.

In den Ausführungsformen gemäß Fig. 1 bis 4 und Fig. 6 bis 8 ist im ersten Ende 5 des Grundkörpers 2 ein Montageloch 8 vorgesehen. Im zweiten Ende 7 des Grundkörpers 2 ist ebenfalls ein Montageloch 9 vorgesehen.

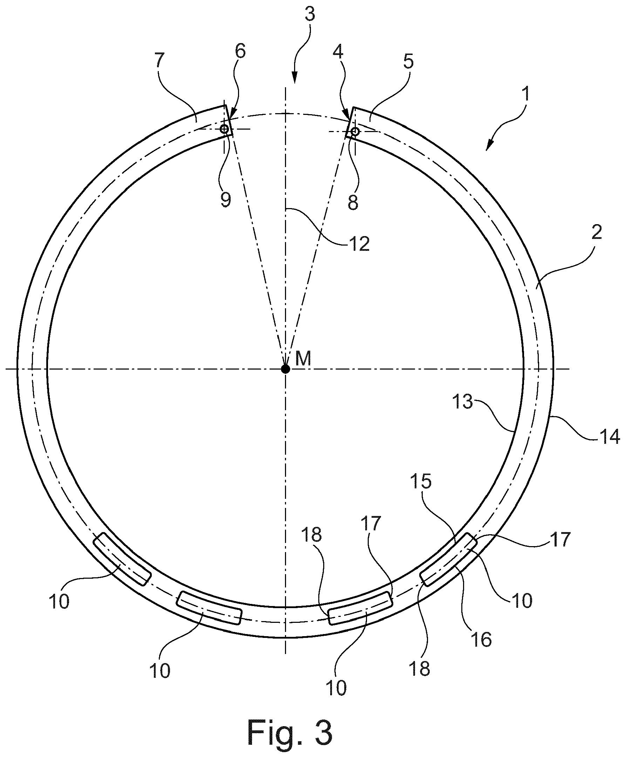

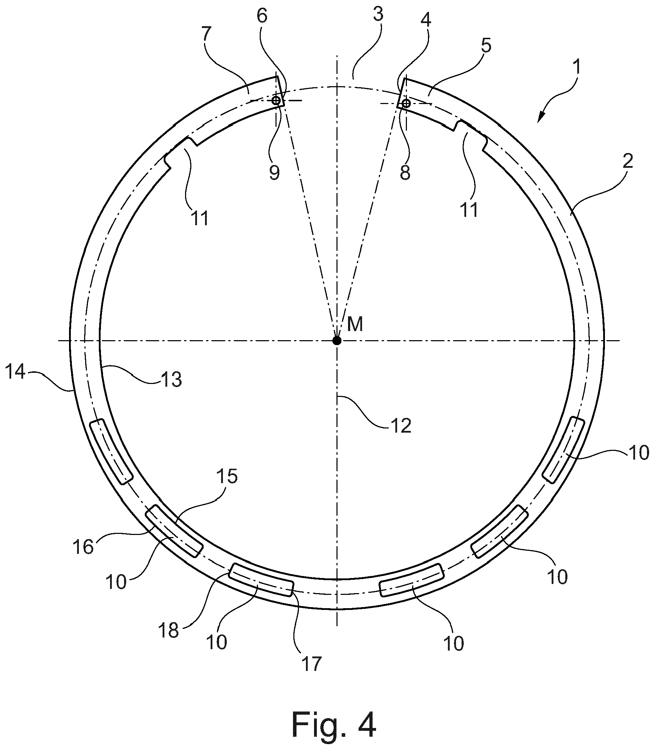

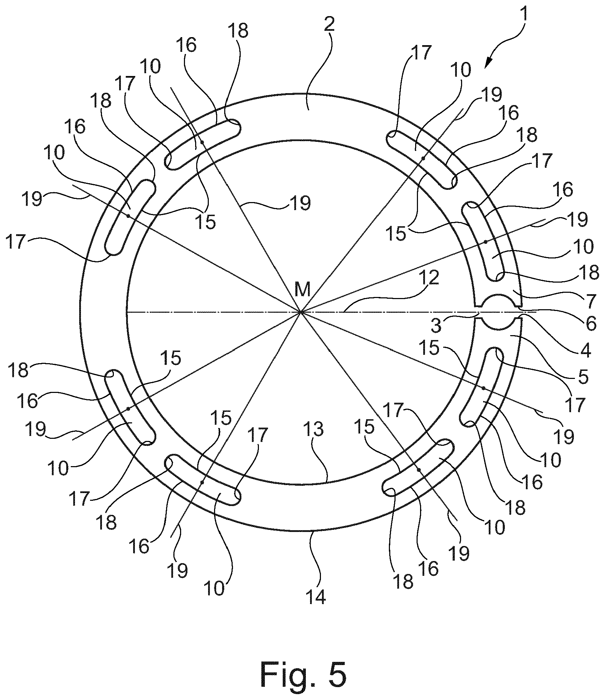

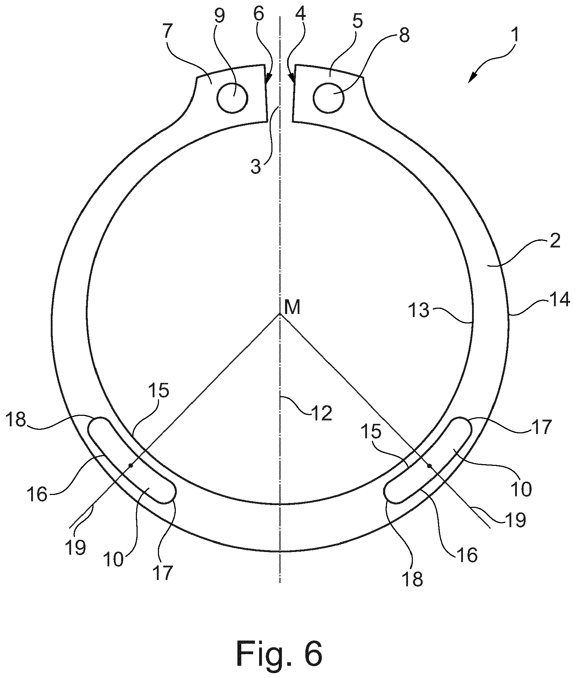

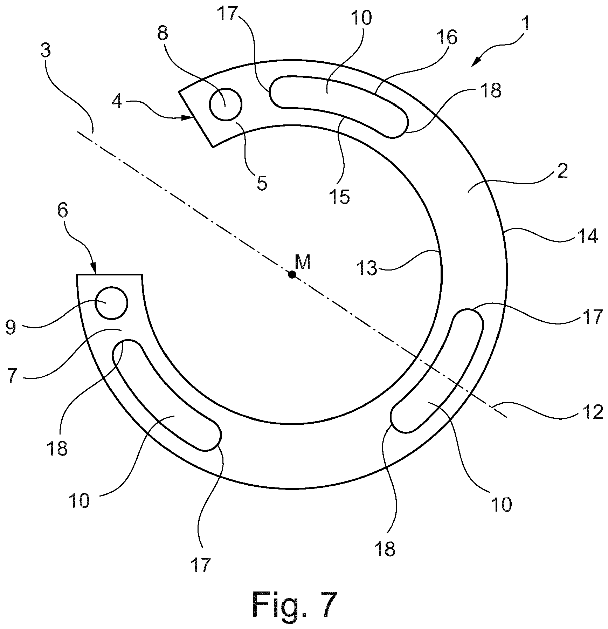

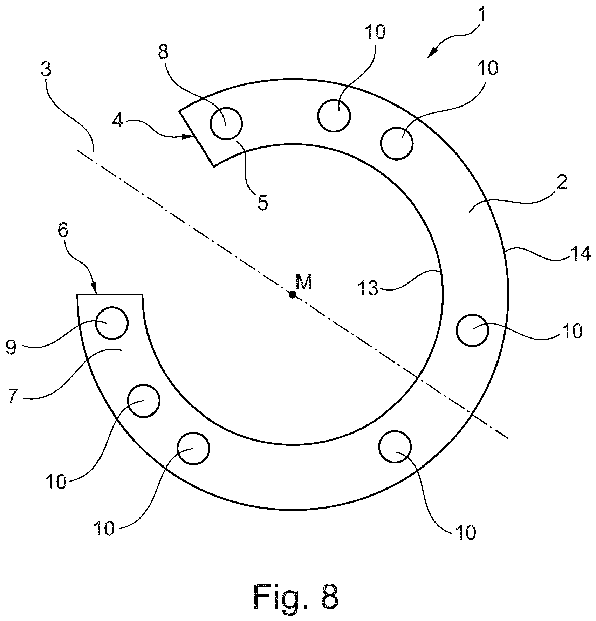

In der Ausführungsform gemäß Fig. 1 weist der Grundkörper 2 vier Taschen 10 auf. In der Ausführungsform der Fig. 2 weist der Grundkörper 2 sechzehn Taschen 10 auf. In der Ausführungsform gemäß Fig. 3 weist der Grundkörper 2 vier Taschen auf. In der Ausführungsform der Fig. 4 weist der Grundkörper 2 sechs Taschen und zwei geöffnete Taschen 11 auf. In der Ausführungsform gemäß Fig. 5 weist der Grundkörper 2 acht Taschen 10 auf. In der Ausführungsform gemäß Fig. 6 weist der Grundkörper 2 zwei Taschen 10 auf. In der Ausführungsform gemäß Fig. 7 weist der Grundkörper 2 drei Taschen 10 auf. In der Ausführungsform gemäß Fig. 8 weist der Grundkörper 2 sechs Taschen 10 auf.

Die erfindungsgemäßen Sicherungsringe 1 gemäß den Ausführungsformen der Fig. 1 bis 8 sind spiegelsymmetrisch bezüglich einer mittig durch die Öffnung 3 verlaufenden Ebene 12 ausgeführt.

Die Taschen 10 in den Ausführungsformen gemäß den Fig. 1 bis 7 sind als bogenförmig ausgeführte Tasche 10 ausgebildet. Dabei weist die jeweilige Tasche 10 ein erstes Taschenende 17 und ein dem ersten Taschenendende 17 in Umfangsrichtung gegenüberliegendes zweites Taschenende 18 auf. In der Ausführungsform der Fig. 2, 3, 4 wird das erste Taschenende 17 und das zweite Taschenende 18 durch eine Begrenzungsfläche gebildet, die in einer radial verlaufenden Ebene verläuft. In der Ausführungsform der Fig. 1, 5, 6 und 7 ist das erste Taschenende 17 und das zweite Taschenende 18 halbkreisförmige ausgeführt.

In der Ausführungsform gemäß Fig. 1 sind zwei Taschen 10 in dem Bereich zwischen 90° und 270° angeordnet, wenn die Mitte der Öffnung 3 als 0°-Position genommen wird. Ferner sind dort eine Tasche 10 in dem Bereich zwischen 10° und 90° und eine Tasche 10 in dem Bereich zwischen 350° und 270° angeordnet, wenn die Mitte der Öffnung 3 als 0°-Position genommen wird. In der 180°-Position ist in keine Tasche angeordnet.

Bei der Ausführungsform der Fig. 2 sind die Taschen 10 regelmäßig über den Umfang des Grundkörpers 2 verteilt. Der Winkel
- zwischen einer radial und durch den Flächenmittelpunkt einer ersten Tasche 10 verlaufenden Linie 19
- und einer radial und durch den Flächenmittelpunkt einer der ersten Tasche 10 benachbarten Tasche 10 verlaufenden Linie 19
ist für jede Paarung benachbarter Taschen 10 im Grundkörper 2 gleich.

Bei den Ausführungsformen der Fig. 1 bis 8 sind alle vorhandenen Taschen 10 hinsichtlich Größe und Form gleich.

Der Grundkörper 2 weist eine Innenkante 13 und eine Außenkante 14 auf. Der Grundkörper 2 weist ein Mittelpunkt M auf.

In der Fig. 1 bis 7 weisen die jeweiligen Taschen 10 des Grundkörper 2 eine Innenkante 15 auf, die die jeweilige Tasche 10 an der dem Mittelpunkt M näherliegenden Seite begrenzt. Die Innenkante 15 ist bogenförmig und verläuft bogenförmig um den Mittelpunkt M des ringförmig ausgeführten Grundkörpers 2. Ferner weist die jeweilige Tasche 10 des Grundkörper eine Außenkante 16 auf, die die jeweilige Tasche 10 an der dem Mittelpunkt M ferner liegenden Seite begrenzt. Die Außenkante 16 verläuft bogenförmig um den Mittelpunkt M des ringförmig ausgeführten Grundkörpers 2.

Die Fig. 5 zeigt eine Ausführungsform, bei der die Endfläche des ersten Endes nur teilweise in einer Ebene liegt und mittig eine halbkreisförmige Ausnehmung, die anstelle eines Montageloches vorgesehen ist, aufweist und die Endfläche des zweiten Endes nur teilweise in einer Ebene liegt und mittig eine halbkreisförmige Ausnehmung, die anstelle eines Montageloches vorgesehen ist, aufweist.

Fig. 6 zeigt eine Ausführungsform, bei der das erste Ende und das zweite Ende als sogenannte Lasche oder als sogenannte Ohren, mithin als Vorsprung zum übrigen Bereich des Grundkörpers ausgeführt sind.

In der Ausführungsform gemäß Fig. 7 ist eine Tasche 10 in dem Bereich zwischen 125° und 235° angeordnet, wenn die Mitte der Öffnung 3 als 0°-Position genommen wird. Ferner sind dort eine Tasche 10 in dem Bereich zwischen 10° und 90° und eine Tasche 10 in dem Bereich zwischen 350° und 270° angeordnet, wenn die Mitte der Öffnung 3 als 0°-Position genommen wird.

Fig. 8 zeigt eine Ausführungsform, bei der die sechs Taschen 10 kreisförmig ausgeführt sind.

Der Grundkörper 2 ist in den Ausführungsformen der Fig. 1 bis 8 im Querschnitt rechteckförmig ausgeführt.

## Patentansprüche

1. Sicherungsring (1) mit einem Grundkörper (2), der bis auf eine ihn unterbrechende Öffnung (3) ringförmig ausgeführt ist, wobei
• die die Ringform unterbrechende Öffnung (3) an einer ersten Seite von einer Endfläche (4) eines ersten Endes (5) des Grundkörpers (2) und an einer zweiten, der ersten Seite gegenüberliegenden Seite von einer Endfläche (6) eines zweiten Endes (7) des Grundkörpers (2) begrenzt wird und
• im ersten Ende (5) ein Montageloch (8) vorgesehen ist und im zweiten Ende (7) ein Montageloch (9) vorgesehen ist,
**dadurch gekennzeichnet, dass** im Grundkörper (2) mindestens eine geschlossene Tasche (10) vorgesehen ist.

2. Sicherungsring (1) mit einem Grundkörper (2), der bis auf eine ihn unterbrechende Öffnung (3) ringförmig ausgeführt ist, wobei
• die die Ringform unterbrechende Öffnung (3) an einer ersten Seite von einer Endfläche (4) eines ersten Endes (5) des Grundkörpers (2) und an einer zweiten, der ersten Seite gegenüberliegenden Seite von einer Endfläche (6) eines zweiten Endes (7) des Grundkörpers (2) begrenzt wird und
• im ersten Ende (5) kein Montageloch (8) vorgesehen ist und/oder im zweiten Ende (7) kein Montageloch (9) vorgesehen ist,
**dadurch gekennzeichnet, dass** im Grundkörper (2) mindestens eine geschlossene Tasche (10) vorgesehen ist.

3. Sicherungsring (1) nach einem der Ansprüche 1 oder 2, **dadurch gekennzeichnet, dass** im Grundkörper (2) mindestens zwei geschlossene Taschen (10) vorgesehen sind.

4. Sicherungsring nach Anspruch 3, **dadurch gekennzeichnet, dass** der Sicherungsring (1) spiegelsymmetrisch bezüglich einer mittig durch die Öffnung (3) verlaufenden Ebene (12) ausgeführt ist.

5. Sicherungsring (1) nach einem der Ansprüche 1 bis 4, **dadurch gekennzeichnet, dass** die geschlossene Tasche (10) bogenförmig ausgeführt ist.

6. Sicherungsring (1) nach einem der Ansprüche 1 bis 5, **dadurch gekennzeichnet, dass** die Gesamtfläche der geschlossenen Taschen (10), die der Fläche der vorhandenen geschlossenen Tasche (10) entspricht, soweit nur eine geschlossene Tasche (10) vorhanden ist, oder der Summe der Flächen der vorhandenen geschlossenen Taschen (10) entspricht, mindestens 10% der Gesamtfläche des Grundkörpers (2) entspricht, wobei die Gesamtfläche des Grundkörpers (2) der Fläche entspricht, die durch die äußere Kontur des Grundkörpers (2) begrenzt wird.

7. Sicherungsring (1) nach einem der Ansprüche 1 bis 6, **dadurch gekennzeichnet, dass** eine geschlossene Tasche (10) in dem Bereich zwischen 125° und 235° angeordnet ist, wenn die Mitte der Öffnung (3) als 0°-Position genommen wird.

8. Sicherungsring (1) nach einem der Ansprüche 1 bis 7, **dadurch gekennzeichnet, dass** eine geschlossene Tasche (10) in dem Bereich zwischen 10° und 90° und/oder eine geschlossene Tasche (10) in dem Bereich zwischen 350° und 270° angeordnet ist, wenn die Mitte der Öffnung (3) als 0°-Position genommen wird.

9. Sicherungsring (1) nach einem der Ansprüche 1 bis 8, **dadurch gekennzeichnet, dass** mehrere, insbesondere bevorzugt die Mehrzahl, insbesondere bevorzugt alle vorhandenen geschlossenen Taschen (10) die gleiche Größe und/oder die gleiche Form haben.

10. Welle mit einer umlaufenden Nut und einem in der Nut angeordneten Sicherungsring nach einem der Ansprüche 1 bis 9.

11. Bauteil mit einer Bohrung und einer in der Bohrung umlaufenden Nut und einem in der Nut angeordneten Sicherungsring nach einem der Ansprüche 1 bis 9.

12. Verwendung eines Sicherungsrings nach einem der Ansprüche 1 bis 9 zur Anordnung in einer umlaufenden Nut einer Welle oder zur Anordnung in einer umlaufenden Nut, die in einer Bohrung eines Bauteils ausgeführt ist.
